Europäisches Patentamt

European Patent Office

Office européen des brevets

(11) Veröffentlichungsnummer: **0 424 628 A1**

## (12) EUROPÄISCHE PATENTANMELDUNG

(21) Anmeldenummer: 90116019.2

(22) Anmeldetag: 22.08.90

(51) Int. Cl.⁵: **C08L 71/12**, C08J 5/06,
C08J 5/08, C08K 5/09,
C08K 7/06, C08K 7/14,
//(C08L71/12,23:20,53:02,25:04)

(30) Priorität: 21.10.89 DE 3935169

(43) Veröffentlichungstag der Anmeldung:
02.05.91 Patentblatt 91/18

(84) Benannte Vertragsstaaten:
AT BE CH DE ES FR GB IT LI NL SE

(71) Anmelder: **HÜLS AKTIENGESELLSCHAFT**
**Patentabteilung / PB 15 - Postfach 13 20**
**W-4370 Marl 1(DE)**

(72) Erfinder: **Grosse-Puppendahl, Thomas**
**Stettiner Strasse 10**
**W-4358 Haltern(DE)**
Erfinder: **Schmidt, Friedrich Georg, Dr.**
**Kriegerweg 32**
**W-4400 Münster(DE)**
Erfinder: **Baron, Christian**
**Diegerot 30 a**
**W-4358 Haltern(DE)**

(54) Faserverstärkte Polyphenylenether-Formmassen und Verfahren zu ihrer Herstellung.

(57) 2.1 Die Aufgabe der vorliegenden Erfindung war, faserverstärkte Formmassen auf Basis von Polyphenylenether zu entwickeln, die eine verbesserte Haftung zwischen Faser und Matrix aufweisen und gute mechanische Eigenschaften besitzen.

2.2 Die Aufgabe wurde gelöst durch Formmassen, die Polyphenylenether, ggf. Styrolpolymerisat, ggf. Polyoctenylen, ein $\alpha,\beta$-ungesättigtes Carbonsäurederivat sowie Kohlenstoff- und/oder Glasfasern enthalten, deren Oberflächen funktionelle Gruppen tragen.

2.3 Die Formmassen werden zur Herstellung technischer Formteile, wie z. B. Zahnräder oder Pumpenteile verwendet.

EP 0 424 628 A1

## FASERVERSTÄRKTE POLYPHENYLENETHER-FORMMASSEN UND VERFAHREN ZU IHRER HERSTELLUNG

Die vorliegende Erfindung betrifft faserverstärkte Formmassen mit überlegenen mechanischen Eigenschaften auf Basis von Polyphenylenetherharzen, sowie ein Verfahren zur Herstellung dieser Formmassen.

Polyphenylenether (PPE), auch Polyphenylenoxide genannt, sind Polymere mit hoher Wärmeformbeständigkeit sowie guten mechanischen und elektrischen Eigenschaften. Sie werden in der Regel als Abmischungen mit Polystyrolharzen (siehe z. B. DE-PSS 21 19 301 und 22 11 005) und/oder Polyoctenylen (DE-OSS 34 42 273 und 35 18 277) eingesetzt.

Es wurden mehrfach Versuche unternommen, die Steifigkeit von PPE enthaltenden Formmassen zu erhöhen, indem aus anorganischem oder organischem Material bestehende, verstärkende Fasern zugemischt wurden.

So sind z. B. aus der DE-05 23 64 901 Polymermischungen aus PPE, Polystyrolharzen und Glasfasern bekannt, wobei die dort verwendeten Glasfasern eine Länge zwischen 3,1 und 25,4 mm, vorzugsweise unterhalb 6,35 mm, aufweisen. In der EP-OS 0 243 991 sowie der entsprechenden US-PS 4 749 737 werden sehr kurze, ungeschlichtete Fasern zur Verbesserung der Faser-Matrix-Haftung im Compound mit Siloxanen gemischt, die Si-H-Bindungen enthalten, und dann mit PPE und einem Polystyrolharz umgeschmolzen.

Eine spezielle Modifizierung der Faseroberfläche durch Behandlung der Glasfaser mit Vinylsilanen oder gamma-Glycidoxypropyl-trimethoxysilanen für den Einsatz in PPE-haltigen Formmassen ist in den Schriften DE-OS 21 32 595, JP 73/97 954, JP 74/10 826 und JP 85/88 072 beschrieben. In der OE-OS 27 19 305 wurde der umgekehrte Weg, nämlich eine Endgruppenmodifizierung des PPE über eine vor der Compoundierung durchgeführte Silylierung, vorgeschlagen, was jedoch einen umständlichen und arbeitsintensiven Weg zum Erzielen einer verbesserten Faser-Matrix-Kopplung darstellt.

Eine vielfach eingesetzte Oberflächenmodifizierung der Verstärkungsfasern wird durch die Behandlung mit Aminoalkylsilanen, z. B. gamma-Aminopropyltriethoxysilan, erzielt. Derart geschlichtete Glasfasern werden in zahlreiche PPE enthaltende Compounds eingearbeitet, wobei zur Anbindung der Faser an die Matrix immer eine zusätzliche Modifizierung der Zusammensetzung der Thermoplastmatrix erforderlich ist. So werden etwa in der JP 87/15 247 der Zusatz von z. B. mit Maleinsäureanhydrid modifiziertem Polypropylen, in der JP 85/46 951 der Zusatz von Ethylen-Maleinsäureanhydrid-Copolymeren und in den Schriften JP 85/44 535, DE-OS 32 46 433 und JP 82/168 938 der Zusatz von Styrol-Maleinsäureanhydrid-Copolymeren beschrieben. Diese Polymerzusätze haben jedoch den Nachteil, dao sie die Wärmeformbeständigkeit der Formmassen erniedrigen oder aber mit der PPE-Matrix nur teilverträglich oder in den meisten Fällen unverträglich sind und daher die mechanischen Eigenschaften der Formmassen verschlechtern.

Die Aufgabe der vorliegenden Erfindung war, faserverstärkte Formmassen auf Basis von PPE zu entwickeln, die unter Vermeidung der oben beschriebenen Nachteile eine verbesserte Haftung zwischen Faser und Matrix aufweisen.

Diese Aufgabe wurde durch Formmassen gelöst, die aus folgenden Komponenten hergestellt werden:

I. 97 bis 50 Gew.-%, bezogen auf die Summe aus I. und II., einer Mischung aus 30 bis 100 Gewichtsteilen eines Polyphenylenethers, 0 bis 70 Gewichtsteilen eines Styrolpolymerisats, 0 bis 10 Gewichtsteilen eines Polyoctenylens sowie 0,1 bis 2,5 Gewichtsteilen eines $\alpha,\beta$-ungesättigten Carbonsäurederivats oder einer Vorstufe davon;

II. 3 bis 50 Gew.-% Kohlenstoff- und/oder Glasfasern, deren Oberflächen funktionelle Gruppen tragen, die mit den $\alpha,\beta$-ungesättigten Carbonsäurederivaten chemische Verknüpfungsreaktionen eingehen können; sowie gegebenenfalls

III. Farbstoffe, Pigmente, Weichmacher, flammhemmende Zusätze, Verarbeitungshilfsmittel und/oder andere übliche Zusätze.

Die erfindungsgemäßen Formmassen lassen sich nach den für die Thermoplastverarbeitung üblichen Verfahren, z. B. Spritzgießen oder Pressen, zu Formkörpern verarbeiten.

Als Polyphenylenether kommen in erster Linie Polyether auf Basis von 2,6-Dimethylphenol in Frage, wobei der Ethersauerstoff der einen Einheit an den Benzolkern der benachbarten Einheit gebunden ist.

Grundsätzlich kommen auch andere o,o′-Dialkylphenole in Frage, deren Alkylrest vorzugsweise höchstens 6 C-Atome besitzt, sofern dieser kein alpha-ständiges tertiäres C-Atom aufweist. Ferner eignen sich Phenole, die lediglich in einer ortho-Stellung durch einen tertiären Alkylrest, insbesondere einen tertiären Butylrest, substituiert sind. Jeder der aufgeführten monomeren Phenole kann in 3-Stellung, gegebenenfalls auch in 5-Stellung, durch eine Methylgruppe substituiert sein. Selbstverständlich können auch Gemische der hier erwähnten monomeren Phenole eingesetzt werden.

Die Polyphenylenether können z. B. in Gegenwart von komplexbildenden Mitteln, wie Kupferbromid und Morpholin, aus den Phenolen hergestellt werden (vgl. DE-OSS 32 24 692 und 32 24 691). Die Viskositätszahlen J, bestimmt nach DIN 53 728 in Chloroform bei 25 °C, liegen im Bereich von 35 bis 80 cm³/g (Konzentration 5 g/l). Bevorzugt ist das Polymere des 2,6-Dimethylphenols, der Poly-(2,6-dimethyl-1,4-phenylenether), mit einer Viskositätszahl J von 45 bis 70 cm³/g. Die Polyphenylenether werden üblicherweise als Pulver oder Granulate eingesetzt.

Die Polyoctenylene werden durch ringöffnende bzw. ringerweiternde Polymerisation von Cycloocten hergestellt (siehe z. B. A. Dräxler, Kautschuk + Gummi, Kunststoffe 1981 , Seiten 185 bis 190). Polyoctenylene mit unterschiedlichen Anteilen an cis- und trans-Doppelbindungen sowie unterschiedlichen J-Werten und dementsprechend unterschiedlichen Molekulargewichten sind nach literaturbekannten Methoden erhältlich. Bevorzugt werden Polyoctenylene mit einer Viskositätszahl von 50 bis 350 cm³/g, vorzugsweise 80 bis 160 cm³/g, bestimmt an einer 0-1 %igen Lösung in Toluol. 55 bis 95 %, vorzugsweise 75 bis 85 %, ihrer Doppelbindungen liegen in der trans-Form vor.

Es gibt verschiedene Möglichkeiten, um eine Mischung aus Polyphenylenether und dem Polyoctenylen herzustellen. Eine Möglichkeit besteht darin, dar man beide Polare in einem geeigneten Lösemittel löst und die Mischung durch Abdampfen des Lösemittels oder Ausfällen mit einem Nichtlöser isoliert. Eine andere Möglichkeit besteht darin, die beiden Polymeren in der Schmelze zu vereinigen. Bezüglich weiterer Einzelheiten wird auf die DE-OS 35 18 277 verwiesen. In einer bevorzugten Ausführungsform enthält die Formmasse 1 bis 10 Gewichtsteile Polyoctenylen.

Unter $\alpha,\beta$-ungesättigten Carbonsäurederivaten sind beispielsweise Verbindungen der allgemeinen Formeln (I) und (II)

(I) $R^1 - CO - CR^2 = CR^3 - CO - R^4$

(II) $R^1 - CO - CR^2 = CR^3_2$

zu verstehen, wobei

$R^1$ und $R^4$ Hydroxylgruppen, Aryloxy- und/oder Alkoxygruppen fit bis zu 12 C-Atomen oder gemeinsam -O- oder -NR⁵- darstellen, $R^2$ und $R^3$ bedeuten Wasserstoff, eine Alkyl- oder Cycloalkylgruppe fit bis zu 12 C-Atomen, eine mit dem Rest COR¹ substituierte Alkylgruppe, eine Arylgruppe, Chlor oder gemeinsam eine Alkylengruppe mit bis zu 12 C-Atomen, während $R^5$ Wasserstoff, Alkyl, Aralkyl oder Arylgruppen mit jeweils bis zu 12 C-Atomen darstellt.

Als Beispiele seien Maleinsäure, Fumarsäure, Itaconsäure, Aconitsäure, Tetrahydrophthalsäure, Methylmaleinsäure, Maleinsäureanhydrid, N-Phenylmaleinimid, Fumarsäurediethylester und Butylacrylat genannt. Bevorzugt werden hierbei Fumarsäure und Maleinsäureanhydrid eingesetzt. Selbstverständlich können auch Mischungen verwendet werden.

Geeignet sind auch Vorstufen solcher $\alpha,\beta$-ungesättigter Carbonsäurederivate, die unter den Bedingungen des Schmelzemischens durch bekannte Reaktionen, wie z. B. Eliminierung oder Retro-Diels-Alder-Reaktion, in diese übergehen.

Selbstverständlich können zusätzlich weitere Verbindungen mit eingesetzt werden, die z. B. durch alternierende Copolymerisation unter Aufpropfen den Einbau des $\alpha,\beta$-ungesättigten Carbonsäurederivats fördern. In erster Linie kommen hierbei Vinylaromaten, wie z. B. Styrol, in Frage, die vor allem mit Maleinsäureanhydrid eine derartige Reaktion eingehen. In der deutschen Patentanmeldung DE-OS 38 31 348 wird die Herstellung derartiger Pfropfcopolymerer beschrieben.

Das Styrolpolymerisat, das gegebenenfalls bei der Herstellung oder der Aufarbeitung des Polyphenylenethers zugegeben wird, soll vorzugsweise mit dem eingesetzten Polyphenylenether verträglich sein. Sein Molekulargewicht Mw liegt im Bereich von 1 500 bis 2 000 000, vorzugsweise im Bereich von 70 000 bis 1 000 000.

Besonders bevorzugte Styrolpolymerisate sind Polystyrol, schlagzäh modifiziertes Polystyrol sowie Styrol-Butadien-Copolymere. Selbstverständlich können auch Mischungen dieser Polymeren eingesetzt werden.

Die Styrol-Butadien-Copolymere können statistisch, verschmiert oder blockförmig sein. Zur Erhöhung der Zähigkeit werden bevorzugt Blockcopolymere des Typs A-B-A eingesetzt. Die Polystyrolblöcke A haben ein mittleres Molekulargewicht Mw von 4 000 bis 150 000 und machen gemeinsam bis zu 33 Gew.-% des Blockcopolymerisats aus. Der Polybutadienblock B, der auch hydriert oder teilhydriert sein kann, hat ein mittleres Molekulargewicht Mw von 20 000 bis 480 000.

Die in der erfindungsgemäßen Formmasse enthaltene Verstärkungsfaser trägt an ihrer Oberfläche vorzugsweise freie Amino-, Epoxid- oder Isocyanatgruppen. Aminogruppen werden z. B. durch Schlichten it einem Copolyamid, niedermolekularen Aminverbindungen oder, speziell bei der Verwendung von Glasfasern, mit gamma-Aminopropyltriethoxysilan aufgebracht; Epoxidgruppen durch Imprägnieren mit unvernetzten Epoxidharzen oder, bei Glasfasern, mit gamma-Glycidoxypropyltrimethoxysilan; Isocyanatgruppen durch Schlichten mit einer Lösung unvernetzter, vorzugsweise niedermolekularer Polyurethanharze. Die Komponenten III werden bevorzugt zu maximal 30 Gew.-%, bezogen auf I, eingesetzt.

Das Mischen der einzelnen Komponenten kann entweder gleichzeitig oder nacheinander geschehen. Im allgemeinen stellt man zunächst die unverstärkte Formmasse als Granulat oder als Schmelze her und mischt in diese die funktionalisierten Fasern in einem gut knetenden Aggregat ein. Dabei können beispielsweise Ein- oder Zweischneckenkneter oder Ko-Kneter verwendet werden. Die Mischtemperatur liegt im allgemeinen zwischen 250 und 350 °C, vorzugsweise zwischen 260 und 310 °C und die Verweilzeit im allgemeinen zwischen 1 und 10 Minuten, vorzugsweise zwischen 3 und 5 Minuten.

Die Formmassen der Erfindung lassen sich nach üblichen Spritzgießverfahren unter den gleichen Bedingungen wie die entsprechenden herkömmlichen thermoplastischen Formmassen verarbeiten. Auch große Formteile lassen sich damit in einfacher Weise herstellen.

Aus den erfindungsgemäßen Formmassen werden speziell betriebsbelastete (im Wechsel und/oder dauerbelastete) Formteile hergestellt, bei denen eine gute Faser-Matrix-Haftung von entscheidender Bedeutung ist. Die Formteile finden z. B. Verwendung im Maschinen- und Apparatebau (beispielsweise für Zahnräder oder Pumpenteile), im Sportartikelbereich, in der Kfz.-Industrie oder in der Elektroindustrie.

Vergleichsbeispiel A

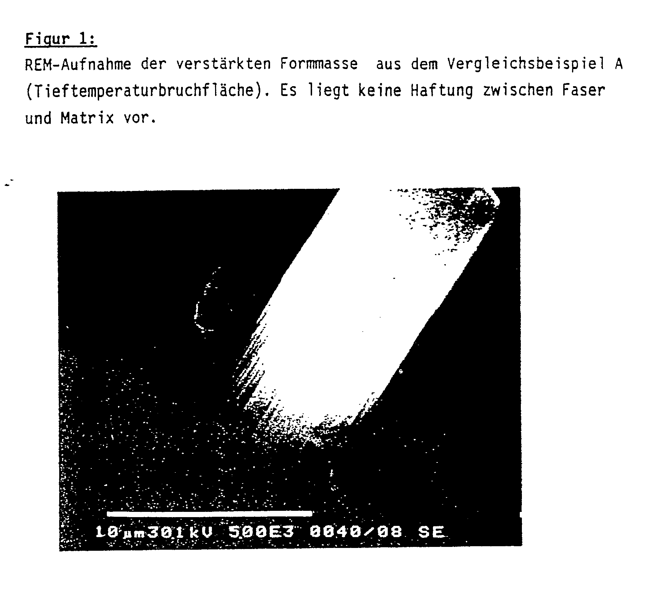

100 Gewichtsteile Polyphenylenether mit einem 3-Wert von 68 cm³/g, der durch oxidative Kupplung von 2,6-Dimethylphenol, Abstoppen der Reaktion und anschließender Reaktionsextraktion gemäß den DE-OSS 33 13 864 und 33 23 777, anschließendem Abdampfen des Lösemittels und Extrusion der Schmelze über einen Entgasungsextruder erhalten wurde, werden mit 2 Gewichtsteilen Diphenylkresylphosphat (DISFLAMOLL(R) DPK, Bayer) und einem Teil IRGANOX(R) 1010 sowie 15,6 Gewichtsteilen einer NH₂-Gruppen tragenden Kohlenstoffaser (GRAFIL(R) XAS/PA 6, Courtaulds Advanced Materials), die zu der PPE-Schmelze dosiert werden, in einem Zweiwellenkneter bei 280 °C umgeschmolzen. Vor dem Austrag des Produkts werden die flüchtigen Bestandteile in einer Entgasungszone entfernt. Das Produkt wird granuliert, getrocknet und zu Prüfkörpern spritzgegossen. Die daran ermittelten Eigenschaften sind in Tabelle 1 aufgeführt. An der rasterelektronischen (REM-)Aufnahme ist deutlich sichtbar, daß keine Haftung zwischen Faser und Matrix vorliegt (Fig. 1).

Beispiele 1 bis 3

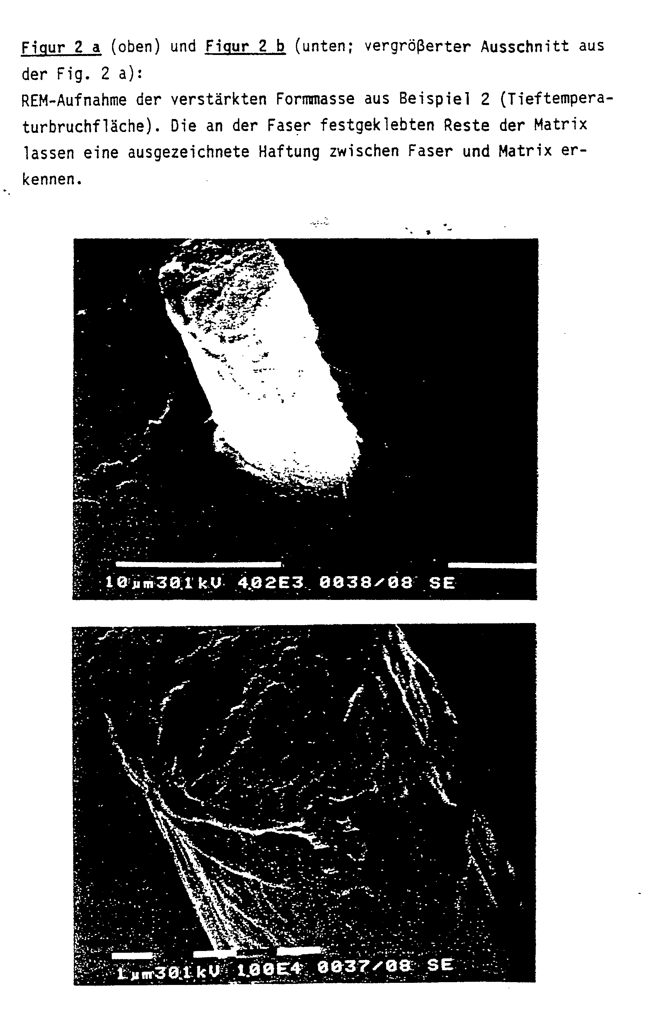

Der im Vergleichsbeispiel A beschriebene Versuch wird wiederholt, wobei jedoch dem Gemisch aus PPE, Diphenylkresylphosphat und IRGANOX(R) 1010 0,5 bis 1,5 Gewichtsteile Maleinsäureanhydrid zugesetzt werden und anschließend die Kohlenstoffaser der Schmelze zudosiert wird. Zusammensetzung und Eigenschaften der so hergestellten Compounds sind in Tabelle 1 aufgeführt. Die REM-Aufnahme von Beispiel 2 zeigt, daß eine ausgezeichnete Haftung zwischen Faser und Matrix vorliegt (Fig. 2 a und 2 b).

Vergleichsbeispiel B

Der im Vergleichsbeispiel A beschriebene Versuch wird wiederholt, wobei jedoch statt der dort verwendeten Kohlenstoffaser eine Epoxidharz-geschlichtete Kohlenstoffaser (TENAX(R) HTA-6-CN, Akzo (Enka AG) eingesetzt wird (Tab. 1).

Beispiel 4

Der im Vergleichsbeispiel B beschriebene Versuch wird wiederholt, wobei jedoch, wie in den Beispielen 1 bis 3 beschrieben, zusätzlich 1,5 Teile Maleinsäureanhydrid eingesetzt werden (Tab. 1).

Tabelle 1

| | Beispiel | | | | | |
|---|---|---|---|---|---|---|
| | A | 1 | 2 | 3 | B | 4 |
| PPE Gew.-Teile | 100 | 100 | 100 | 100 | 100 | 100 |
| Diphenylkresylphosphat Gew.-Teile | 2 | 2 | 2 | 2 | 2 | 2 |
| IRGANOX[R] 1010 Gew.-Teile | 1 | 1 | 1 | 1 | 1 | 1 |
| Maleinsäureanhydrid Gew-Teile | - | 0,5 | 1 | 1,5 | - | 1,5 |
| GRAFIL[R] XAS/PA 6 Gew.-Teile | 15,6 | 15,6 | 15,6 | 15,6 | - | - |
| TENAX[R] HTA-6-CN Gew.-Teile | - | - | - | - | 15,6 | 15,6 |
| Zug-E-Modul DIN 53 457 MPa | 8600 | 8400 | 9100 | 9200 | 7000 | 9500 |
| Zugfestigkeit DIN 53 455 MPa | 98 | 117 | 132 | 122 | 92 | 136 |
| Reißdehnung DIN 53 455 % | 1,5 | 1,8 | 1,9 | 2,2 | 1,9 | 1,8 |
| Schlagzähigkeit DIN 53 453 kJ/m$^2$ | 13 | 17 | 17 | 13 | 14 | 16 |

**Figur 1:**

REM-Aufnahme der verstärkten Formmasse aus dem Vergleichsbeispiel A (Tieftemperaturbruchfläche). Es liegt keine Haftung zwischen Faser und Matrix vor.

**Figur 1:**

REM-Aufnahme der verstärkten Formmasse aus dem Vergleichsbeispiel A (Tieftemperaturbruchfläche). Es liegt keine Haftung zwischen Faser und Matrix vor.

10 µm 30.1 kV 5.00E3 0040/08 SE

**Figur 2 a**(oben) und **Figur 2 b** (unten; vergrößerter Ausschnitt aus der Fig. 2 a):

REM-Aufnahme der verstärkten Formmasse aus Beispiel 2 (Tieftemperaturbruchfläche). Die an der Faser festgeklebten Reste der Matrix lassen eine ausgezeichnete Haftung zwischen Faser und Matrix erkennen.

## Ansprüche

1. Faserverstärkte Formmasse, die aus folgenden Komponenten hergestellt werden:
   I. 97 bis 50 Gew.-%, bezogen auf die Summe aus I. und II., einer Mischung aus 30 bis 100 Gewichtsteilen eines Polyphenylenethers, 0 bis 70 Gewichtsteilen eines Styrolpolymerisats, 0 bis 10 Gewichtsteilen eines Polyoctenylens sowie 0,1 bis 2,5 Gewichtsteilen eines α,β-ungesättigten Carbonsäurederivats oder einer Vorstufe davon;

II. 3 bis 50 Gew.-% Kohlenstoff- und/oder Glasfasern, deren Oberflächen funktionelle Gruppen tragen, die fit den $\alpha,\beta$-ungesättigten Carbonsäurederivaten chemische Verknüpfungsreaktionen eingehen können, sowie gegebenenfalls

III. Farbstoffe, Pigmente, Weichmacher, flammhemmende Zusätze, Verarbeitungshilfsmittel und/oder andere übliche Zusätze.

2. Formmasse gemäß Anspruch 1,
dadurch gekennzeichnet,
daß der Polyphenylenether ein Polyether auf Basis von 2,6-Dimethylphenol ist.

3. Formmasse gemäß den Ansprüchen 1 und 2,
dadurch gekennzeichnet,
daß sie 1 bis 10 Gewichtsteile eines Polyoctenylens enthält.

4. Formmasse gemäß den Ansprüchen 1 bis 3,
dadurch gekennzeichnet,
daß die $\alpha,\beta$-ungesättigten Carbonsäurederivate Verbindungen der allgemeinen Formeln (I) und (II) darstellen,

(I) $R^1 - CO - CR^2 = CR^3 - CO - R^4$

(II) $R^1 - CO - CR^2 = CR^3_2$

wobei $R^1$ und $R^4$ unabhängig voneinander Hydroxyl-, Aryloxy- und/oder Alkoxygruppen mit bis zu 12 C-Atomen oder gemeinsam -O- oder $-NR^5-$ bedeuten, $R^2$ und $R^3$ für Wasserstoff, eine Alkyl- oder Cycloalkylgruppe mit bis zu 12 C-Atomen, eine fit dem Rest $COR^1$ substituierte Alkylgruppe, eine Arylgruppe, Chlor oder gemeinsam für eine Alkylengruppe mit bis zu 12 C-Atomen steht;
$R^5$ hat die Bedeutung Wasserstoff, Alkyl, Aralkyl oder Aryl.

5. Formmasse gemäß Anspruch 4,
dadurch gekennzeichnet,
daß das $\alpha,\beta$-ungesättigte Carbonsäurederivat Fumarsäure und/oder Maleinsäureanhydrid darstellt.

6. Formmasse gemäß den Ansprüchen 4 und 5,
dadurch gekennzeichnet,
daß zu ihrer Herstellung zusätzlich ein Vinylaromat, vorzugsweise Styrol, mit eingesetzt wird.

7. Formmasse gemäß den Ansprüchen 1 bis 6,
dadurch gekennzeichnet,
daß das Styrolpolymerisat teilweise oder vollständig aus Blockcopolymeren des Typs A-B-A besteht, wobei A einen Polystyrolblock und B einen Polybutadienblock bedeutet, der hydriert oder unhydriert sein kann.

8. Formmasse gemäß den Ansprüchen 1 bis 7,
dadurch gekennzeichnet,
daß die Fasern an ihrer Oberfläche freie Amino-, Epoxid- oder Isocyanatgruppen tragen.

9. Verfahren zur Herstellung von Formmassen gemäß den Ansprüchen 1 bis 8,
dadurch gekennzeichnet,
daß die einzelnen Komponenten in der Schmelze gemischt werden.

10. Aus den Formmassen gemäß den Ansprüchen 1 bis 8 hergestellte Formteile.

**Figur 1:**

REM-Aufnahme der verstärkten Formmasse  aus dem Vergleichsbeispiel A
(Tieftemperaturbruchfläche). Es liegt keine Haftung zwischen Faser
und Matrix vor.

Figur 2 a (oben) und Figur 2 b (unten; vergrößerter Ausschnitt aus
der Fig. 2 a):

REM-Aufnahme der verstärkten Formmasse aus Beispiel 2 (Tieftemperaturbruchfläche). Die an der Faser festgeklebten Reste der Matrix
lassen eine ausgezeichnete Haftung zwischen Faser und Matrix erkennen.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl⁵) |
|---|---|---|---|
| A | <u>EP - A2 - 0 288 787</u><br>(GENERAL ELECTRIC COMPANY)<br>  * Ansprüche; Seite 4, Zeilen<br>   35-39; Seite 5, Zeilen 29-<br>   56 *<br>       -- | 1,2,6,<br>7,9,10 | C 08 L 71/12<br>C 08 J 5/06<br>C 08 J 5/08<br>C 08 K 5/09<br>C 08 K 7/06<br>C 08 K 7/14// |
| A | <u>US - A - 4 728 693</u><br>(DRÖSCHER et al.)<br>  * Ansprüche; Spalte 4, Zeile<br>   55 - Spalte 5, Zeile 39 *<br>       -- | 1-6,9,<br>10 | (C 08 L 71/12<br>C 08 L 23:20<br>C 08 L 53:02<br>C 08 L 25:04) |
| A | <u>EP - A2 - 0 319 833</u><br>(BASF AKTIENGESELLSCHAFT)<br>  * Ansprüche; Seite 4, Zeile<br>   22; Seite 5, Zeilen 26-28 *<br>       ---- | 1,2,<br>4-7,9,<br>10 | |

RECHERCHIERTE
SACHGEBIETE (Int. Cl⁵)

C 08 L 71/00
C 08 J
C 08 K

Der vorliegende Recherchenbericht wurde für alle Patentansprüche erstellt.

| Recherchenort | Abschlußdatum der Recherche | Prüfer |
|---|---|---|
| WIEN | 11-12-1990 | WEIGERSTORFER |